# EUROPÄISCHE PATENTANMELDUNG

(11) **EP 4 059 818 A1**
(43) Veröffentlichungstag der Anmeldung: **21.09.2022**
(21) Anmeldenummer: 21162843.3
(22) Anmeldetag: 16.03.2021
(51) Int. Cl.: B62H 3/12

(54) **HALTER UND HALTEVORRICHTUNG FÜR ZWEIRÄDER**

(71) Anmelder: Unseld, Siegfried, 89129 Langenau (DE)
(72) Erfinder: Unseld, Siegfried, 89129 Langenau (DE)
(74) Vertreter: Baur & Weber Patentanwälte PartG mbB

(57) **Zusammenfassung**

Halter (1) für Zweiräder (19), insbesondere Fahrräder und Elektrofahrräder, umfassend
einen Kulisseneingriff (7), der in einer Längsrichtung (9) in einer Kulissenbahn (5) führbar ist,
eine erste Aufhängevorrichtung (15), an der ein erstes Zweirad (19) an seinem Rad (21) aufhängbar ist, und eine erste Stützvorrichtung (35), die ausgebildet ist, das Rad (21) des ersten Zweirads (19) seitlich abzustützen, sodass das Rad (21) winklig zur Längsrichtung (9) hängt,
eine zweite Aufhängevorrichtung (17), an der ein zweites Zweirad (19) an seinem Rad (21) aufhängbar ist, und eine zweite Stützvorrichtung (37), die ausgebildet ist, das Rad (21) des zweiten Zweirads (19) seitlich abzustützen, sodass das Rad (21) winklig zur Längsrichtung (9) hängt,
wobei die erste Aufhängevorrichtung (15) und die zweite Aufhängevorrichtung (17) voneinander abgewandt angeordnet sind
und wobei die erste Stützvorrichtung (35) und die zweite Stützvorrichtung (37) voneinander abgewandt angeordnet sind.

## Beschreibung

Die Erfindung betrifft einen Halter für Zweiräder, insbesondere Fahrräder und Elektrofahrräder, und eine Haltevorrichtung mit solch einem Halter.

Radfahren mit Elektrofahrrädern, das heißt Fahrräder mit elektrischem Hilfsmotor, erfreut sich großer Beliebtheit. Damit einhergehend besteht das Bedürfnis, das Elektrofahrrad auch auf Reisen oder zur Verwendung fern des üblichen Einsatzgebietes mitzunehmen. Für konventionelle Fahrräder ohne elektrischen Hilfsmotor hat sich zu diesem Zweck ein Fahrraddachträger bewährt, der auf einem Autodach montiert wird und geeignet ist, mehrere, üblicherweise vier, Fahrräder während der Autofahrt auf dem Autodach zu transportieren. Elektrofahrräder sind jedoch deutlich schwerer als konventionelle Fahrräder, sodass der Transport von Elektrofahrrädern statt konventionellen Fahrrädern auf dem Fahrraddachträger die zulässige Dachlast des Autos überschreitet.

Statt eines Fahrraddachträgers kann ein Anhänger zum Elektrofahrradtransport eingesetzt werden. Jedoch ist der Ein- und Auslagevorgang ohne Haltevorrichtung mühselig und wird durch sich ineinander verklemmende Elektrofahrräder noch erschwert. Letzteres kann durch ausreichend Abstand der Elektrofahrräder zwar verhindert werden, geht aber mit einem hohen Platzbedarf der Elektrofahrräder einher. Die gleichen Probleme treten bei der stationären Lagerung mehrerer Elektrofahrräder, beispielsweise in einem Kellerraum, auf. Die zuvor genannten Probleme sind nicht auf Elektrofahrräder beschränkt, sondern treten auch bei anderen Zweirädern, insbesondere Fahrrädern auf.

Es stellt sich die Aufgabe, eine alternative Vorrichtung anzugeben, um Zweiräder, insbesondere Fahrräder und Elektrofahrräder während Transport oder Lagerung zu halten.

Die Aufgabe wird durch einen Halter für Zweiräder und eine Haltevorrichtung für Zweiräder gemäß den nebengeordneten Ansprüchen gelöst.

Der Halter für Zweiräder, insbesondere Fahrräder und Elektrofahrräder, umfasst einen Kulisseneingriff, der in einer Längsrichtung in einer Kulissenbahn führbar ist. Der Halter umfasst eine erste Aufhängevorrichtung, an der ein erstes Zweirad an seinem Rad aufhängbar ist, und eine erste Stützvorrichtung, die ausgebildet ist, das Rad des ersten Zweirads seitlich abzustützen, sodass das Rad winklig zur Längsrichtung hängt. Der Halter umfasst eine zweite Aufhängevorrichtung, an der ein zweites Zweirad an seinem Rad aufhängbar ist, und eine zweite Stützvorrichtung, die ausgebildet ist, das Rad des zweiten Zweirads seitlich abzustützen, sodass das Rad winklig zur Längsrichtung hängt. Die erste Aufhängevorrichtung und die zweite Aufhängevorrichtung sind voneinander abgewandt, und die erste Stützvorrichtung und die zweite Stützvorrichtung sind voneinander abgewandt.

Im beschriebenen Halter können zwei Zweiräder, insbesondere Fahrräder und Elektrofahrräder, eingehängt werden und somit in einfacher Weise in ihre Halteposition gebracht werden. Elektrofahrrad meint im Folgenden ein Fahrrad mit Hilfsmotor, das manchmal auch als E-Bike oder Pedelec bezeichnet wird. Fahrrad meint im Folgenden ein Fahrrad ohne Hilfsmotor. Natürlich ist der Halter auch für andere Zweiräder, wie beispielsweise Roller, geeignet.

Der Kulisseneingriff ist derart ausgestaltet, dass er vorteilhafterweise nur in der vorgegebenen Längsrichtung in der Kulissenbahn hin und her verschiebbar ist. Er dreht sich also nicht in der Kulissenbahn. Dies geht üblicherweise mit einer langgestreckten Ausgestaltung einher, bei der der Kulisseneingriff länger als seine Breite ist.

Das Aufhängen des Rads, das heißt des Laufrads mit Reifen und Felge, kann das Vorderrad oder vorteilhafterweise das Hinterrad des Zweirads betreffen. Dabei liegt das Rad üblicherweise mit der Felge auf der Aufhängevorrichtung auf und wird seitlich durch die Stützvorrichtung abgestützt, vorteilhafterweise an Reifenmantel und/oder Felgenrand. Die Orientierung der Räder winklig, insbesondere quer zur Längsachse meint, dass die Ebene, in der Rad und Felge verlaufen, winklig, insbesondere quer zur Längsachse orientiert ist. Bei einem quer zur Längsachse hängenden Rad verläuft deren Radachse parallel zur Längsachse.

Die erste und zweite Aufhängevorrichtung sind voneinander abgewandt, sodass die Zweiräder von entgegengesetzten Seiten auf die Aufhängevorrichtungen gehängt werden können. In einer Ausführung erstrecken sich die Aufhängevorrichtungen in Längsrichtung, damit dies erreicht wird.

Der Halter kann in die Kulissenbahn eingeführt werden, sodass der Kulisseneingriff des Halters und die Kulissenbahn eine Kulisse bilden. Der Halter wird von der Kulissenbahn geführt und ist entlang dieser beweglich. Die Halter ragt aus der Kulissenbahn nach unten, sodass die Zweiräder mit nach oben weisendem Rad aufgehängt werden können. Vorteilhafterweise werden die Zweiräder, insbesondere die Fahrräder und Elektrofahrräder an ihren Hinterrädern aufgehängt, sodass die Rahmenebene des Zweirads in Einklang mit der Orientierung des aufgehängten Hinterrades ist.

Der Halter und mit ihm die erste und die zweite Aufhängevorrichtung haben eine vorgegebene Orientierung zur Kulissenbahn, sodass die in die Aufhängevorrichtungen eingehängten Zweiräder mit ihrer Rahmenebene winklig, vorherhafterweise quer, zur Längsrichtung hängen, was den Platzbedarf der aufgehängten Zweiräder in Längsrichtung reduziert. Vorteilhafterweise sind die Aufhängevorrichtungen drehfest zum Kulisseneingriff angeordnet.

Der Halter weist eine erste Stützvorrichtung, die ausgebildet ist, das Rad des ersten Zweirads seitlich abzustützen, und eine zweite Stützvorrichtung, die ausgebildet ist, das Rad des zweiten Zweirads seitlich abzustützen, auf. Die Abstützung erfolgt vorteilhafterweise derart, dass die hängenden Räder parallel oder nahezu parallel ausgerichtet sind. Die erste Stützvorrichtung und die zweite Stützvorrichtung sind voneinander abgewandt angeordnet, sodass die Abstützung in Gegenrichtung erfolgt. Die Stützvorrichtungen sind ebenso wie die Aufhängevorrichtungen voneinander abgewandt angeordnet, sodass die Zweiräder von entgegengesetzten Seiten auf den Halter gehängt werden können und mit ihren voneinander abgewandten Seiten die eingehängten Räder abstützen. Da die Zweiräder von verschiedenen Seiten eingehängt und an voneinander abgewandten Seiten abgestützt werden, kann jedes der beiden Zweiräder unabhängig vom anderen wieder abgehängt werden. Die Stützvorrichtungen sind ausgebildet, die eingehängten Räder vertikal, insbesondere quer zur Längsrichtung, abzustützen, sodass die Zweiräder platzsparend hängen.

Vorteilhafterweise sind die Halter metallen oder im Wesentlichen metallen ausgebildet.

Die Haltevorrichtung für Zweiräder, insbesondere Fahrräder und Elektrofahrräder, umfasst zumindest einen Halter und die Kulissenbahn, in der zumindest eine Halter führbar ist oder geführt ist. Das erste und das zweite Zweirad sind so aufhängbar, dass sie in eine von der Kulissenbahn abgewandten Richtung hängen. Mit anderen Worten: Die Zweiräder hängen unter der Kulissenbahn. In einer Haltevorrichtung können eine Mehrzahl von Zweirädern gehalten werden und mit den Haltern entlang der Kulissenbahn verschoben werden, was das Auf- und Abhängen der Zweiräder erleichtert, da es an derselben Stelle erfolgen kann. Die Kulissenbahn wird so montiert, dass die Halter nach unten aus der Kulissenbahn ragen und jeweils zwei Zweiräder auf einen Halter gehängt werden können, sodass sie unter der Kulissenbahn hängen und die Zweiräder auf diese Weise hängend gelagert oder transportiert werden können.

In einer Ausführung ist der Kulisseneingriff in die Kulissenbahn einführbar und aus der Kulissenbahn herausnehmbar, sodass die Anzahl der Halter in der Kulissenbahn veränderbar ist und die Halter austauschbar sind. Die Halter in der Kulissenbahn können vorteilhafterweise gegen unbeabsichtigtes Herausführen gesichert werden, beispielsweise durch das Aufsetzen einen Stoppers auf das offene Ende der Kulissenbahn, an dem die Halter ein- und ausgeführt werden. Die Kulissenbahn verläuft oberhalb der in die Halter eingehängten Zweiräder. Sie kann an einer ortsfesten oder beweglichen Decken- oder Rahmenkonstruktion befestigt werden, die geeignet ist, die Haltevorrichtung mit den aufgehängten Zweirädern zu tragen.

Vorteilhafterweise weist der Kulisseneingriff zumindest eine Rolle auf, auf der der Halter auf der Kulissenbahn entlang rollt. Ein als Laufwagen ausgebildeter Kulisseneingriff hat vorteilhafterweise mehrere Rollen, die hintereinander und/oder nebeneinander angeordnet sind. Die Lagerung auf Rollen erlaubt ein leichtgängiges Bewegen des Halters trotz eingehängter, schwerer Elektrofahrräder.

In einer Ausführung sind die erste Aufhängevorrichtung und die zweite Aufhängevorrichtung in Längsrichtung voneinander beabstandet, sodass ausreichend Platz zwischen den Zweirädern ist, um sie in einfacher Weise auf- und abzuhängen und Beschädigungen bei den Zweirädern während des Auf- und Abhängens sowie bei Lagerung und Transport zu vermeiden.

Vorteilhafterweise sind die erste Aufhängevorrichtung und die zweite Aufhängevorrichtung zueinander höhenversetzt bezogen auf den Kulisseneingriff und/oder querversetzt bezogen auf die Längsrichtung angeordnet. Der Versatz führt dazu, dass bei eingehängten Zweirädern deren in Längsrichtung ragenden Komponenten ebenfalls versetzt zueinander positioniert sind und so ein Verhaken der Zweiräder sowie Berührungen und Beschädigungen an den Zweirädern verhindert werden. Dieser Effekt kann noch unterstützt werden, wenn zwei Zweiräder so an einen Halter gehängt werden, dass ihre Lenker in entgegengesetzte Richtungen weisen. Die Zweiräder sind dann sowohl um 180 Grad gedreht zueinander aufgehängt als auch höhen- und/oder querversetzt.

In einer Ausführung weist die erste Aufhängevorrichtung einen Haken auf, und die zweite Aufhängevorrichtung weist einen Haken auf. Der Haken ist ein einfach zu fertigendes und stabiles Mittel zum Aufhängen des Rades. Er kann gerade oder gekrümmt ausgebildet sein. In einer Ausführung sind die erste und die zweite Stützvorrichtung als Bleche ausgebildet, die die Räder seitlich abstützen. In einer Ausführung ist die erste Aufhängevorrichtung fest mit der ersten Stützvorrichtung verbunden, und die zweite Aufhängevorrichtung ist fest der zweiten Stützvorrichtung verbunden, sodass beispielsweise die Haken aus den als Blechen ausgebildeten Stützvorrichtungen ragen.

In einer Ausführung weist der Halter ein Basisteil auf, das sich zwischen den Aufhängevorrichtungen in Längsrichtung erstreckt oder in dem die Aufhängevorrichtungen ausgebildet sind, beispielsweise indem die Basisteilseiten hakenförmige Kontouren aufweisen, und das drehfest mit dem Kulisseneingriff verbunden ist. Das Basisteil kann als Blech ausgebildet sein.

Die Haltevorrichtung mit einem oder mehreren der oben beschriebenen Halter kann eine Kulissenbahn aufweisen, die als insbesondere gerade Profilschiene ausgebildet ist, die in einem Anhänger oder Wagon im Deckenbereich montierbar oder montiert ist. Alternativ kann die Profilschiene auch an einer Zimmerdecke montiert sein, um so die platzsparende stationäre Aufbewahrung von Zweirädern, beispielsweise in einem Kellerraum oder einer Garage, zu ermöglichen.

Die Kulissenbahn kann Teil einer Rahmenkonstruktion sein, die im Anhänger oder Wagon oder stationär montiert ist.

Eine alternative Haltevorrichtung ist als Zweiradheckträger, der auf einer Anhängerkopplung befestigbar ist, ausgebildet. Solch ein Zweiradheckträger ermöglicht ein einfaches Be- und Entladen der Zweiräder durch Auf- beziehungsweise Abhängen.

Nachfolgend werden einige Ausführungsbeispiele anhand der Zeichnung näher erläutert. Es zeigen:
Figur 1 eine Seitenansicht eines Ausführungsbeispiels einer Haltevorrichtung für Zweiräder,
Figur 2 eine dreidimensionale Ansicht eines Ausführungsbeispiels einer Haltevorrichtung,
Figur 3 eine Seitenansicht eines weiteren Ausführungsbeispiels einer Haltevorrichtung für Zweiräder,
Figur 4 eine Seitenansicht eines weiteren Ausführungsbeispiels einer Haltevorrichtung für Zweiräder,
Figur 5 eine dreidimensionale Ansicht eines Halters aus der Haltevorrichtung in Figur 4,
Figur 6 eine dreidimensionale Ansicht eines weiteren Ausführungsbeispiels eines Halters in einem nicht verriegelten Zustand, und
Figur 7 eine dreidimensionale Ansicht des Halters aus Figur 6 in einem verriegelten Zustand.

In den Figuren sind gleiche oder funktional gleichwirkende Komponenten mit den gleichen Bezugszeichen versehen.

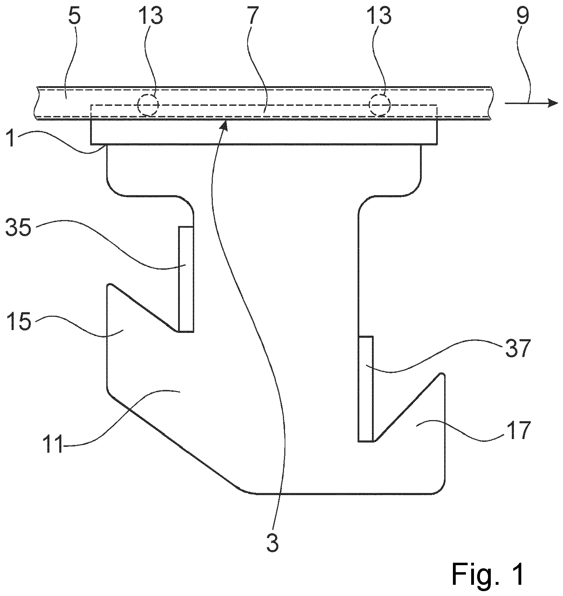

Figur 1 zeigt eine Seitenansicht eines Ausführungsbeispiels einer Haltevorrichtung für Zweiräder mit einem Halter 1, der durch eine Kulisse 3 führbar ist.

Die Kulisse 3 weist eine Kulissenbahn 5 und einen Kulisseneingriff 7 auf, der entlang einer Längsrichtung 9 in der Kulissenbahn 5 beweglich gelagert ist und durch diese geführt wird. Die Längsrichtung 9 ist die durch die Kulissenbahn 5 vorgegebene Bewegungsrichtung. Die Kulissenbahn 5 hat ein Querschnittsprofil quer zur Längsrichtung 9, das den Kulisseneingriff 7 umschließt und führt, sodass er sich, abgesehen von bauartbedingtem Spiel, nur in Längsrichtung 9 in der Kulissenbahn 5 bewegen kann. An der Unterseite der Kulissenbahn 5 verläuft in Längsrichtung 9 ein Spalt.

Der Halter 1 wird durch die Kulisse 3 oberseitig gehalten. Er weist ein Basisteil 11 und den Kulisseneingriff 7 auf, die drehfest miteinander verbunden sind. Der Kulissenengriff 7 ist in der Kulissenbahn 5 positioniert und das Basisteil 11 ragt durch einen Spalt in der Kulissenbahn 5 nach unten. Der Kulisseneingriff 7 ist als sich in Längsrichtung 9 erstreckender Laufwagen mit Rollen 13 ausgebildet. Die Rollen 13 laufen paarweise zu beiden Seiten des Spalts in der Kulissenbahn 5.

Das flache Basisteil 11 erstreckt sich in Längsrichtung 9 und weist an gegenüberliegenden Seiten eine erste Aufhängevorrichtung 15 und eine zweite Aufhängevorrichtung 17 auf, an denen ein erstes beziehungsweise ein zweites Zweirad, insbesondere ein Elektrofahrrad an einem seiner Räder aufhängbar ist. Das Zweirad kann auch ein Fahrrad sein. Das Basisteil 11 ist flach und aus Blech ausgebildet, dessen Seitenkontouren hakenförmig sind, wobei als die Haken ausgebildeten Aufhängevorrichtungen 15, 17 voneinander abgewandt sind, in Längsrichtung 9 ragen und zueinander höhenversetzt sind. Die Haken ragen zumindest ungefähr im 45-Grad-Winkel nach oben. Vorteilhafterweise beträgt der Winkel 40 bis 50 Grad, noch vorteilhafterweise 45 Grad.

Optional können die Aufhängevorrichtungen 15, 17 mit Verriegelungen versehen sein, die ein unbeabsichtigtes Herausspringen des Zweirads, beispielsweise während des Transport, verhindern. Abschließbare Verriegelungen bieten zusätzlich einen Diebstahlsschutz. Optional können die Haken auch gepolstert ausgebildet sein, beispielsweise durch einen Kunststoffüberzug im Auflagebereich des Rads, um Beschädigungen am Rad zu verhindern.

An gegenüberliegenden Seiten des Basisteils 11 sind quer zur Längsrichtung 9 verlaufend eine erste und eine zweite Stützvorrichtung 35, 37 vorgesehen. Sie an den einander zugewandten Seiten der Haken positioniert an. Die erste und die zweite Stützvorrichtung 35, 37 sind als quer zur Längsrichtung 9 angeordnete Bleche ausgebildet, die an den Seitenflächen des Basisteils 11 beabstandet voneinander befestigt sind, beispielweise durch eine Schweißverbindung. Die Stützvorrichtungen 35, 37 sind parallel jedoch mit dem gleichen Höhenversatz wie die Aufhängevorrichtungen 15, 17 angeordnet.

Bei aufgehängten Zweirädern stützen die Stützvorrichtungen 35, 37 die Räder der Zweiräder seitlich, sodass sie quer zur Längsrichtung 9 ausgerichtet sind. Durch den sich winklig nach oben erstreckenden Haken und die senkrecht angeordnete Stützvorrichtung 35, 37 wird das Rad auf einer Seite auf der Felge und auf der anderen Seite am Reifenmantel abgestützt.

In einem alternativen Ausführungsbeispiel sind die erste und die zweite Stützvorrichtung 35, 37 als winklig zur Längsrichtung 9 angeordnete Bleche ausgebildet, wobei die Bleche parallel oder zumindest nahezu parallel verlaufen.

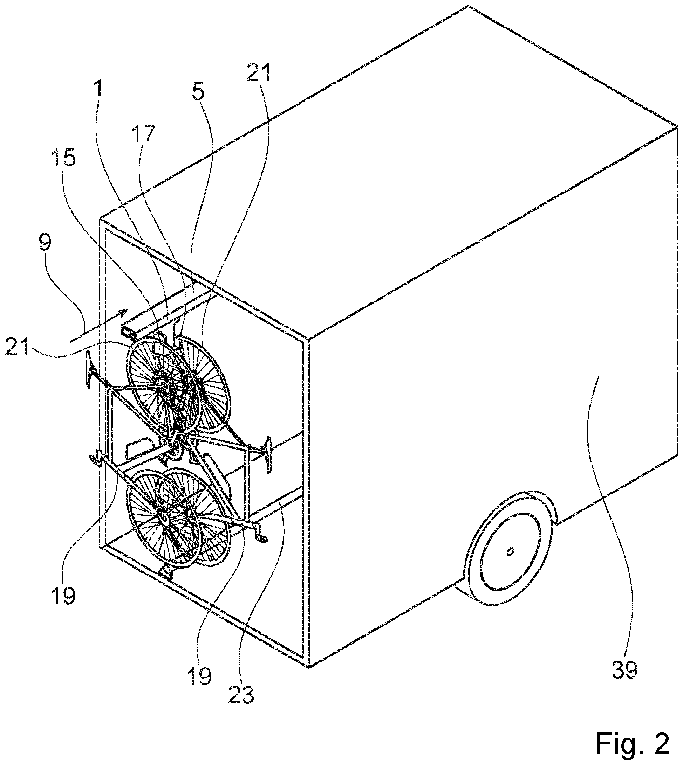

Figur 2 zeigt schematisch eine dreidimensionale Ansicht eines Ausführungsbeispiels einer Haltevorrichtung in einem Anhänger 39 zum Transport mehrerer Zweiräder 19, insbesondere Elektrofahrräder. Das Zweirad 19 kann auch ein Fahrrad sein. Anhänger 39, die beispielsweise an Kraftfahrzeuge gekoppelt werden können, erlauben den Transport mehrerer Zweiräder 19 und sind für größere Zuladungen ausgelegt als der Transport auf einem Fahrzeugdach.

In der Haltevorrichtung sind mehrere Halter 1 für jeweils zwei Zweiräder 19, insbesondere Fahrräder und Elektrofahrräder, vorgesehen, die über eine Kulisse 3 am Anhängerdach geführt werden. Die Halter 1 können wie in Figur 1 beschrieben ausgebildet sein. Die Kulissenbahn 5 ist als Profilschiene ausgebildet und im Deckenbereich des Anhängers 17 befestigt. Sie verläuft entlang des Anhängers 17 und reicht in diesem Ausführungsbeispiel über dessen Heck hinaus, um das Einhängen der Halter 1 und Zweiräder 19 zu erleichtern. Die Kulissenbahn 5 kann am Anhängerdach oder an einer Rahmenkonstruktion im Dachbereich befestigt sein. Das heckseitige Ende der Kulissenbahn 5 ist offen, sodass mehrere Halter 1 in die Kulissenbahn 5 einführbar sind. Nach dem Einführen der Halter 1 werden diese gegen unbeabsichtigtes Herausführen gesichert, indem ein Stopper auf das heckseitige Ende der Kulissenbahn 5 aufgesetzt wird. Auch am frontseitigen Ende der Kulissenbahn 1 begrenzt ein Stopper die Bewegung der Halter 1. Das Herausnehmen der Halter 1 erlaubt eine alternative Nutzung des Anhängers 39, wenn keine Zweiräder transportiert werden, da die Kulissenbahn 5 im Dachbereich nur einen geringen Platzbedarf hat. Das Herausnehmen der Halter 1 erlaubt auch die Verwendung anderer Haltertypen, die beispielsweise für spezielle Zweiradtypen optimiert sind.

Am Halter 1 mit einer ersten und einer zweiten Aufhängevorrichtungen 15, 17 sind zwei Zweiräder 19 aufhängbar. Die beispielsweise als Elektrofahrräder ausgebildeten Zweiräder 19 werden an ihrem Hinterrad 21 auf eine der Aufhängevorrichtungen 15, 17 gehängt, sodass das Rad 21 und damit auch die Rahmenebene des Zweirads 19 winklig, insbesondere zur quer Längsrichtung 9 der Kulissenbahn 5 orientiert ist. Die sich in Längsrichtung 9 erstreckenden Aufhängevorrichtungen 15, 17 mit den quer verlaufenden ersten und zweiten Stützvorrichtungen 35, 37 verhindern ein Aufhängen der Räder 21 parallel zur Längsrichtung 9, sodass die Räder 21 winklig hängen. Die beiden, im selben Halter 1 eingehängten Zweiräder 19 werden vorteilhafterweise mit entgegengesetzt orientierten Rahmen 19 eingehängt, sodass unter anderem die Sättel der beiden Elektrofahrräder in entgegengesetzte Richtungen weisen. Des Weiteren sind die Zweiräder 19 höhenversetzt aufgehängt. Sowohl die entgegengesetzten Orientierung der Zweiräder 19 als auch deren höhenversetzte Aufhängung bewirken eine bessere Raumnutzung der Zweiräder 19, das mit einem einfachen Auf- und Abhängen und dem Vermeiden von Transportschäden einhergeht.

Durch den Höhenversatz der ersten und zweiten Aufhängevorrichtung 15, 17 ist es auch möglich, die aufgehängten Zweiräder 19 in dieselbe Richtung auszurichten, sodass alle Sättel auf derselben Seite der Aufhängevorrichtungen 15, 17 sind und alle Lenker auf der gegenüberliegenden Seite der Aufhängevorrichtungen 15, 17 sind. Auch das Aufhängen der Zweiräder 19 mit beliebiger Orientierung ist möglich. Ebenso ist es möglich, die Zweiräder 19 an ihren Vorderrädern aufzuhängen, sei es mit gleicher, abwechselnder oder beliebiger Orientierung.

Beim Beladen des Anhängers 39 werden die Halter 1 in die Kulissenbahn 5 eingeführt, zwei als Elektroräder ausgebildeten Zweiräder 19 werden an den Hinterrädern 21 in den Halter 1 eingehängt, und der Halter 1 mit den Elektrofahrrädern wird zur Anhängerfrontseite geschoben. Die Schritte werden wiederholt, bis die gewünschte Anzahl Elektrofahrräder eingeladen worden ist. Das Aufhängen der Zweiräder 21 auf die Halter 1 erfolgt an derselbe Stelle am Anhängerheck, da die Halter 1 mit den Zweirädern 19 erst nach dem Aufhängen der Zweiräder 19 in ihre Position geschoben werden. Dann wird das offene Ende der Kulissenbahn 5 verriegelt, um die Halter 1 in der Kulissenbahn 5 zu sichern.

So lassen sich beispielsweise sieben Halter 1 in derselben Kulissenbahn 5 einführen, sodass 14 Elektroräder in den Anhänger 39 geladen und hängend transportiert werden können.

Zur zusätzlichen Transportsicherung der Zweiräder 21 ist eine Sicherungsvorrichtung 23 vorgesehen, die als über dem Anhängerboden angeordnete Stange ausgebildet ist. Die Stange verläuft in Längsrichtung 9 vorteilhafterweise senkrecht unter der Kulissenbahn 5. Die eingehängten Elektrofahrräder werden an den herunterhängenden Vorderrädern an der Sicherungsvorrichtung 23 fixiert. Dies erfolgt durch übliche Transportsicherungsmittel, beispielsweise Seile oder Gurte. Die zusätzliche Transportsicherung verhindert Pendelbewegungen der aufgehängten Zweiräder 19 während des Transports und vermeidet dadurch mögliche Beschädigungen durch aneinanderschlagende Zweiräder 19. Alternative Ausführungen der zusätzlichen Transportsicherung sind denkbar.

Nach Transportende wird die zusätzliche Transportsicherung entfernt. Die Verriegelung am heckseitigen Ende der Kulissenbahn 5 wird entfernt und ein Halter 1 mit den Elektrofahrrädern wird zum Anhängerheck gezogen, die Elektrofahrräder werden vom dem Halter 1 abgehängt, und der Halter 1 wird aus der Kulissenbahn 5 geführt. Die Schritte werden wiederholt, bis alle oder zumindest die gewünschte Anzahl Zweiräder 19 ausgeladen worden sind.

Die oben beschriebene Haltevorrichtung mit Kulissenbahn 5 und Haltern 1 ist nicht auf die Verwendung im Anhänger 39 begrenzt. In anderen Ausführungsbeispielen kann eine Kulissenbahn 5 in einem Wagon, beispielsweise einem Eisenbahn- oder Straßenbahnwagon, montiert sein, in dem Zweiräder 21 transportiert werden sollen. Wegen der größeren Breite des Wagons kann es zweckmäßig sein, die Kulissenbahn 5 nicht mittig, sondern zur Wagonseitenwand hin versetzt zu montieren, sodass die Zweiräder 29 an einer Längsseite des Wagons hängen und auf der anderen Längsseite noch Platz für Sitze und Gepäckaufbewahrung bleibt. Es ist auch denkbar, zwei Kulissenbahnen 5 nebeneinander im Wagon zu platzieren, sodass Zweiräder 21 an beiden Längsseiten des Wagons hängen können.

Eine Haltevorrichtung mit Kulissenbahn 5 und Haltern 1 kann auch zur hängenden Lagerung von Zweirädern an einem stationären Ort, beispielsweise in einem Kellerraum oder in einer Garage, verwendet werden. Im Fall der stationären Lagerung ist die Kulissenbahn 5 an der Decke oder an einer Rahmenkonstruktion montiert. Bei der ortfesten Lagerung kann auf eine zusätzliche Transportsicherung über das Aufhängen hinaus verzichtet werden.

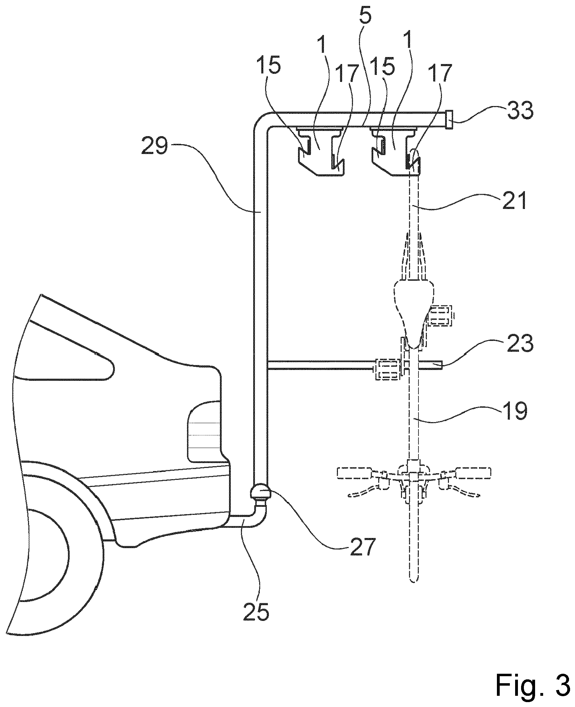

Figur 3 zeigt schematisch ein weiteres Ausführungsbeispiel einer Haltevorrichtung in einer Seitenansicht. Die Haltevorrichtung ist als Zweiradheckträger, der auf einer Anhängerkopplung 25 befestigbar ist, ausgebildet.

Die Haltevorrichtung weist eine Kopplung 27 auf, die mit der Anhängekopplung 25 des Fahrzeugs verbindbar ist. Ferner weist sie einen nach oben ragenden Arm 29 mit einem vertikal verlaufenden Endbereich auf. Im Endbereich ist die Kulissenbahn 5 angeordnet, in die an der vom Fahrzeug abgewandten Seite Halter 1 einführbar sind. Zur Sicherung der Halter 1 ist die Kulissenbahn 5 verriegelbar. Zu diesem Zweck wird das offene Ende der Kulissenbahn 5 mit einem Stopper 33 verschlossen. Ein weiterer vertikaler oder schräg verlaufender Bereich unterhalb des Endbereichs ist als stangenförmige Sicherungsvorrichtung 23 ausgebildet. In diesem Ausführungsbeispiel verläuft die Sicherungsvorrichtung 23 in Rahmenhöhe der aufgehängten Zweiräder 19. Die Fixierung erfolgt an den Rahmen und/oder Vorderrädern der aufgehängten Zweiräder 19. Insgesamt ist die Haltevorrichtung ohne Halter 1 in der Seitenansicht F-förmig ausgebildet.

Beim Beladen werden die Halter 1 in die Kulissenbahn 5 eingeführt, die als Elektrofahrräder ausgebildeten Zweiräder 19 werden eingehängt und der Halter 1 mit den Elektrofahrrädern wird in Richtung der Kopplung 27 geschoben. Diese Schritte werden wiederholt, bis die gewünschte Anzahl Elektrofahrräder eingeladen worden ist, was jedoch durch die zulässige Last auf die Anhängerkopplung 25 begrenzt ist. Dann wird das offene Ende der Kulissenbahn 5 mit dem Stopper 33 verriegelt, um die Halter 1 in der Kulissenbahn zu sichern. Zur zusätzlichen Transportsicherung werden die eingehängten Elektrofahrräder an den herunterhängen Rahmen oder Vorderrädern an der Sicherungsvorrichtung 23 fixiert. Dies erfolgt durch übliche Transportsicherungen, beispielsweise Seile oder Gurte. Natürlich ist es auch möglich, die nicht benötigte Halter 1 in der Kulissenbahn 5 zu belassen.

Die Belastbarkeit der Haltevorrichtung ist durch die Last der Anhängerkopplung 25 begrenzt, sodass üblicherweise weniger Elektrofahrräder als mit einem Anhänger 39 transportiert werden können.

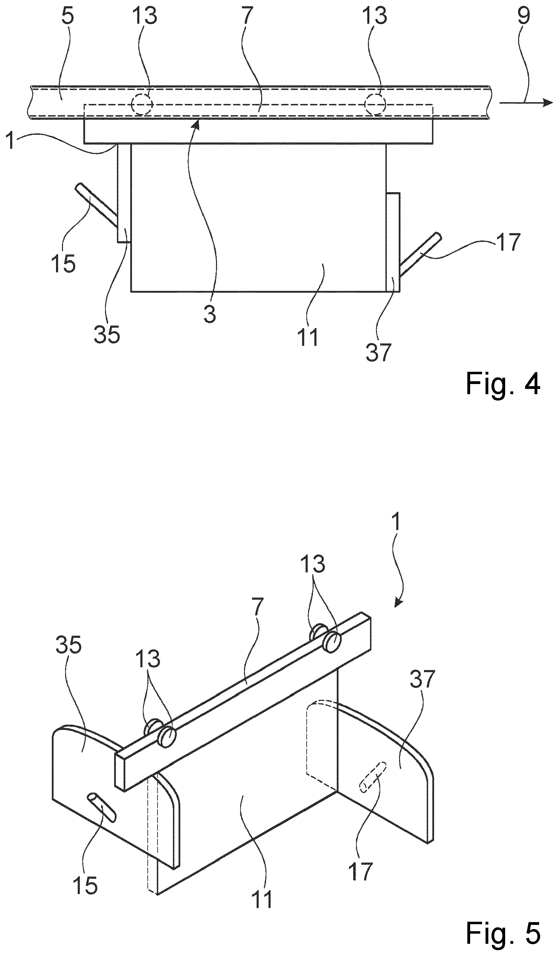

Figur 4 zeigt eine Seitenansicht einer Haltevorrichtung für Zweiräder mit einem weiteren Ausführungsbeispiel eines Halter 1, der durch eine Kulisse 3 führbar gelagert ist. Figur 5 zeigt den Halter 1 der Haltevorrichtung aus Figur 4 in einer dreidimensionalen Ansicht.

Die Kulisse 3 weist eine Kulissenbahn 5 und einen Kulisseneingriff 7 auf, der entlang einer Längsrichtung 9 in der Kulissenbahn 5 beweglich gelagert ist und durch diese geführt wird. Die Kulissenbahn 5 hat ein Querschnittsprofil quer zur Längsrichtung 9, das den Kulisseneingriff 7 umschließt und führt, sodass er sich, abgesehen von bauartbedingtem Spiel, nur in Längsrichtung 9 bewegen kann. An der Unterseite der Kulissenbahn 5 verläuft in Längsrichtung ein Spalt, aus dem der Halter 1 ragt.

Der Halter 1 wird durch die Kulisse 3 oberseitig gehalten. Er weist ein Basisteil 11 und den Kulisseneingriff 7 auf, die drehfest miteinander verbunden sind. Die Verbindung kann beispielsweise durch eine Schweißverbindung erfolgen. Der Kulissenengriff 7 ist in der Kulissenbahn 5 positioniert und das Basisteil 11 ragt durch einen Spalt in der Kulissenbahn 5 nach unten. Der Kulisseneingriff 7 ist als sich in Längsrichtung 9 erstreckender Laufwagen mit Rollen 13 ausgebildet. Die Rollen 13 laufen zu beiden Seiten des Spalts in der Kulissenbahn 5.

An gegenüberliegenden Seiten des Basisteils 11 sind quer zur Längsrichtung 9 verlaufend eine erste und eine zweite Stützvorrichtung 35, 37 vorgesehen, an denen eine erste beziehungsweise eine zweite Aufhängevorrichtung 15, 17 für Zweiräder angeordnet sind. Die Zweiräder sind insbesondere Elektrofahrräder, die an den Hinterrädern an der ersten und der zweiten Aufhängevorrichtungen 15, 17 aufgehängt werden. Die erste und die zweite Stützvorrichtung 35, 37 sind als quer zur Längsrichtung 9 angeordnete Bleche ausgebildet, die an den Seitenflächen des Basisteils 11 beabstandet voneinander befestigt sind, beispielweise durch eine Schweißverbindung. Die Stützvorrichtungen 35, 37 sind parallel jedoch mit einem Höhenversatz und einem seitlichen Versatz quer zur Längsrichtung 9 angeordnet. An den voneinander abweisenden Seiten der ersten und der zweiten Stützvorrichtung 35, 37 sind die erste beziehungsweise die zweite hakenförmige Aufhängevorrichtung 15, 17 als schräg in Längsrichtungen 9 ragende Stifte ausgebildet. Die Aufhängevorrichtungen 15, 17 sind voneinander abgewandt, sodass die Zweiräder 19 von gegenüberliegenden Seiten des Halters 1 auf die Aufhängevorrichtung 15, 17 gehängt werden können. Die Aufhängevorrichtungen 15, 17 sind mit einem Höhenversatz und einem seitlichen Versatz quer zur Längsrichtung 9 angeordnet. Der Höhen- und Seitenversatz erfolgt durch die Anordnung der Stützvorrichtungen 35, 37 relativ zum Basisteil 11. Die erste und die zweite Aufhängevorrichtung 15, 17 sind in gleicher Weise auf der ersten beziehungsweise der zweiten Stützvorrichtungen 35, 37 angeordnet und derart dimensioniert, dass bei eingehängtem Zweirad 19 ein Sektor des Radmantels seitlich abgestützt wird. Die Oberkanten der als Bleche ausgebildeten Stützvorrichtungen 35, 37 verlaufen gerundet, den Kreisboden des Rades imitierend, sodass eine gute Abstützung mit geringem Materialeinsatz erreicht wird. Bei eingehängtem Zweirad 19 liegt die Felge auf dem Stift, und die Stützvorrichtungen 35, 37 stützen die Räder vertikal am Reifenmantel, das heißt seitlich ab, sodass sie quer zur Längsrichtung 9 ausgerichtet sind. Die Stützvorrichtungen 35, 37 stabilisieren damit die Position der Zweiräder 19 auch während des Transports.

Natürlich kann auch bei der oben beschriebenen Haltevorrichtung eine stangenförmige Sicherungsvorrichtung 23 zur Fixierung der eingehängten Zweiräder 19 vorgesehen sein.

In einer alternativen Ausführung sind die Aufhängevorrichtungen 15, 17 und Stützvorrichtungen 35, 37 nicht quer, sondern in einem geringerem Winkel als 90 Grad zur Längsrichtung 9 angeordnet, sodass auch die eingehängten Zweiräder 19 im entsprechenden Winkel hängen. Dies geht mit einem geringeren Platzbedarf in Querrichtung aber mit einem größeren Platzbedarf in Längsrichtung 9 als bei quer angeordneten Aufhängevorrichtungen 13, 15 und Stützvorrichtungen 35, 37 einher.

Die Kulissenbahn 5 und der Halter 1 können beispielsweise aus Metall ausgebildet sein, was mit einer einfachen Fertigung und stabilen Ausbildung der Komponenten einhergeht. Zumindest die Rollen 13 des Kulisseneingriffs 7 können noch andere Materialien aufweisen, beispielsweise eine Kunststoffbeschichtung zum leichteren und leiseren Abrollen. Ein schützende Beschichtung, beispielsweise aus Kunststoff, in den Auflagebereichen des aufgehängten Rads 21, kann das Rad 21 vor Beschädigungen schützen. In alternativen Ausführungsbeispielen sind die Komponenten aus anderen Materialen, beispielsweise Kunststoff gefertigt.

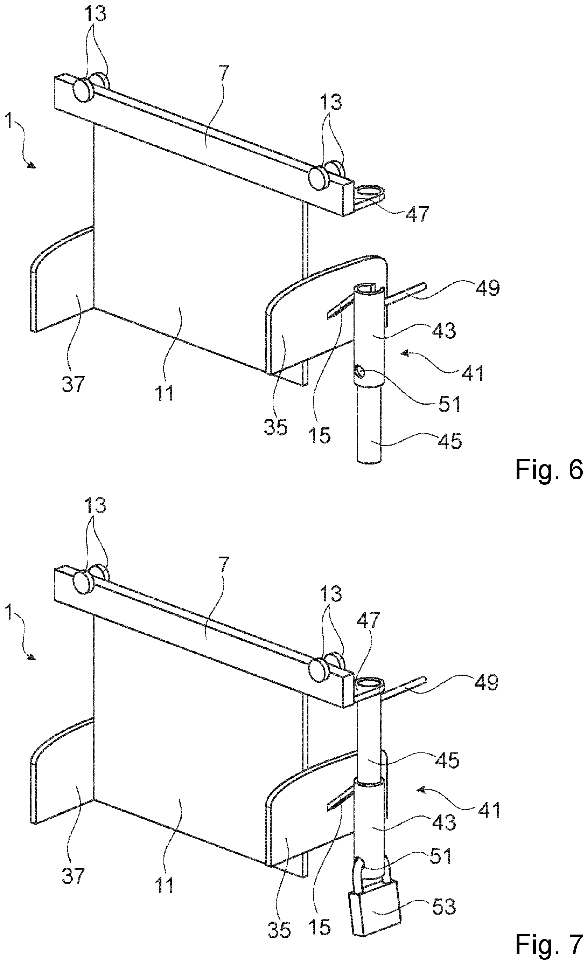

Figur 6 zeigt eine dreidimensionale Ansicht eines weiteren Ausführungsbeispiels eines Halters 1 in einem nicht verriegelten Zustand.

Der Halter 1 weist wie das zuvor beschriebene Ausführungsbeispiel ein Basisteil 11 und einen Kulisseneingriff 7 auf, die drehfest miteinander verbunden sind. An gegenüberliegenden Seiten des Basisteils 11 sind quer zur Längsrichtung 9 verlaufend eine erste und eine zweite Stützvorrichtung 35, 37 vorgesehen, die als quer zur Längsrichtung 9 angeordnete Bleche ausgebildet sind. An den Blechen sind eine erste und eine zweite Aufhängevorrichtungen 15, 17 für Zweiräder angeordnet. Die erste und zweite Aufhängevorrichtung 15, 17 sind als schräg in Längsrichtungen 9 ragende Stifte an den Blechen ausgebildet. Die Stützvorrichtungen 35, 37 sind parallel jedoch mit einem Höhenversatz und einem seitlichen Versatz quer zur Längsrichtung 9 angeordnet. Die Aufhängevorrichtungen 15, 17 sind ebenfalls mit einem Höhenversatz und einem seitlichen Versatz quer zur Längsrichtung 9 angeordnet. Der Höhen- und Seitenversatz erfolgt durch die Anordnung der Stützvorrichtungen 35, 37 relativ zum Basisteil 11. Die Aufhängevorrichtungen 15, 17 und die Stützvorrichtung 35, 37 sind voneinander abgewandt, sodass die Zweiräder 19 von gegenüberliegenden Seiten des Halters 1 auf die Aufhängevorrichtungen 15, 17 gehängt werden können. Exemplarisch ist die erste Aufhängevorrichtung 15 mit einer abschließbaren Verriegelung 41 versehen, um das eingehängte Zweirad 19 vor Diebstahl zu schützen. Vorteilhafterweise kann solch eine abschließbare Verriegelung 41 auch an der zweiten Aufhängevorrichtung 17 vorgesehen sein.

Die Verriegelung weist einen Hülse 43 auf, aus der ein Zylinder 45 herausziehbar ist, sodass er sich von der Hülse 43 bis zu einem Anschlag 47 erstreckt. Der Anschlag 47 ist im oberen Bereich des Halters 1 positioniert, und die Hülse 43 ist am Haken befestigt, sodass im nicht verriegelten Zustand das Rad 21 des Zweirad 19 beim Aufhängen zwischen Anschlag 47 und Hülse 43 geführt wird, um es auf den Stift zu hängen.

Figur 7 zeigt eine dreidimensionale Ansicht des Halters 1 in einem verriegelten Zustand. Zum Verriegeln wird der Zylinder 45 an einem radial herausragenden Griff 49 zum Anschlag 47 geführt. Der Anschlag 47 weist eine Aussparung auf, in die der Zylinder 45 eingreift. Der Anschlag 47 stoppt die Bewegung durch den anschlagenden Griff 49. Die Position des Zylinders 45 wird durch ein Schloss 53, dessen Bügel sich durch zwei Aussparungen 51 im unteren Bereich des Hülse 43 erstreckt, fixiert, sodass die Aufhängevorrichtung 15 verriegelt ist. Ein Bolzen in den Aussparungen 51 hätte denselben Effekt. Dadurch kann das Zweirad 19 im verriegelten Zustand nicht mehr aus der Aufhängevorrichtung 15 genommen werden. Die Verwendung des Schlosses 53 sichert die Verriegelung 41 gegen unbefugtes und unbeabsichtigtes Lösen und dient als Diebstahlsschutz.

Vorteilhafterweise ist eine, insbesondere abschließbare Verriegelung 41 sowohl an der ersten als auch an der zweiten Aufhängevorrichtung 15, 17 vorgesehen. Es sind andere Ausführungsbeispiele für abschließbare Verriegelungen denkbar.

Die in Figur 4 und 5 sowie in Figur 6 und 7 beschriebenen Halter 1 können in den zuvor beschriebenen Haltevorrichtungen zum Halten von Zweirädern 19 verwendet werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Halter
- 3: Kulisse
- 5: Kulissenbahn
- 7: Kulisseneingriff
- 9: Längsrichtung
- 11: Basisteil
- 13: Rolle
- 15, 17: Aufhängevorrichtung
- 19: Zweirad
- 21: Rad
- 23: Sicherungsvorrichtung
- 25: Anhängekopplung
- 27: Kopplung
- 29: Arm
- 33: Stopper
- 35, 37: Stützvorrichtung
- 39: Anhänger
- 41: Verriegelung
- 43: Hülse
- 45: Zylinder
- 47: Anschlag
- 49: Griff
- 51: Aussparung
- 53: Schloss

## Patentansprüche

1. Halter (1) für Zweiräder (19), insbesondere Fahrräder und Elektrofahrräder, umfassend
einen Kulisseneingriff (7), der in einer Längsrichtung (9) in einer Kulissenbahn (5) führbar ist,
eine erste Aufhängevorrichtung (15), an der ein erstes Zweirad (19) an seinem Rad (21) aufhängbar ist, und eine erste Stützvorrichtung (35), die ausgebildet ist, das Rad (21) des ersten Zweirads (19) seitlich abzustützen, sodass das Rad (21) winklig zur Längsrichtung (9) hängt,
eine zweite Aufhängevorrichtung (17), an der ein zweites Zweirad (19) an seinem Rad (21) aufhängbar ist, und eine zweite Stützvorrichtung (37), die ausgebildet ist, das Rad (21) des zweiten Zweirads (19) seitlich abzustützen, sodass das Rad (21) winklig zur Längsrichtung (9) hängt,
wobei die erste Aufhängevorrichtung (15) und die zweite Aufhängevorrichtung (17) voneinander abgewandt angeordnet sind
und wobei die erste Stützvorrichtung (35) und die zweite Stützvorrichtung (37) voneinander abgewandt angeordnet sind.

2. Halter (1) nach Anspruch 1,
wobei der Kulisseneingriff (7) in die Kulissenbahn (5) einführbar ist und aus der Kulissenbahn (5) herausnehmbar ist.

3. Halter (1) nach Anspruch 1 oder 2,
wobei der Kulisseneingriff (7) zumindest eine Rolle (13) aufweist.

4. Halter (1) nach einem der vorangegangenen Ansprüche,
wobei die erste Aufhängevorrichtung (15) und die zweite Aufhängevorrichtung (17) in Längsrichtung (9) voneinander beabstandet sind.

5. Halter (1) nach einem der vorangegangenen Ansprüche,
wobei die erste Aufhängevorrichtung (15) und die zweite Aufhängevorrichtung (17) höhenversetzt und/oder querversetzt zueinander angeordnet sind.

6. Halter (1) nach einem der vorangegangenen Ansprüche,
wobei die erste Stützvorrichtung (35) ausgebildet ist, das Rad (21) des ersten Zweirads (19) winklig, insbesondere quer zur Längsrichtung (9), abzustützen, und die zweite Stützvorrichtung (37) ausgebildet ist, das Rad (21) des zweiten Zweirads (19) winklig, insbesondere quer zur Längsrichtung (9), abzustützen.

7. Halter (1) nach einem der vorangegangenen Ansprüche,
wobei die erste Aufhängevorrichtung (15) fest mit der ersten Stützvorrichtung (35) verbunden ist und die zweite Aufhängevorrichtung (17) fest der zweiten Stützvorrichtung (37) verbunden ist.

8. Halter (1) nach einem der vorangegangenen Ansprüche,
wobei die erste Aufhängevorrichtung (15) einen Haken aufweist und die zweite Aufhängevorrichtung (17) einen Haken aufweist.

9. Halter (1) nach einem der vorangegangenen Ansprüche,
wobei die erste und die zweite Stützvorrichtung (35, 37) als Bleche ausgebildet sind.

10. Halter (1) nach einem der vorangegangenen Ansprüche,
umfassend ein Basisteil (11), das sich zwischen der ersten und der zweiten Aufhängevorrichtung (15, 17) in Längsrichtung (9) erstreckt oder in dem die erste und die zweite Aufhängevorrichtung (15, 17) ausgebildet sind und das drehfest mit dem Kulisseneingriff (7) verbunden ist.

11. Halter (1) nach einem der vorangegangenen Ansprüche,
wobei die erste Aufhängevorrichtung (15) und/oder die zweite Aufhängevorrichtung (17) verriegelbar oder sowohl verriegelbar als auch abschließbar sind.

12. Haltevorrichtung für Zweiräder (19), insbesondere Fahrräder und Elektrofahrräder, umfassend
zumindest einen Halter (1) nach einem der vorangegangenen Ansprüche und eine Kulissenbahn (5), in der der zumindest eine Halter (1) führbar ist oder geführt ist, wobei das erste und das zweite Zweirad (19) so aufhängbar sind, dass sie von der Kulissenbahn (5) abgewandt hängen.

13. Haltevorrichtung nach Anspruch 12,
wobei die Kulissenbahn (5) so ausgebildet ist, dass der Kulisseneingriff (7) in die Kulissenbahn (5) einführbar ist und gegen Herausführen sicherbar ist und aus der Kulissenbahn (5) herausführbar ist.

14. Haltevorrichtung nach Anspruch 12 oder 13,
wobei die Kulissenbahn (5) als Profilschiene ausgebildet ist, die in einem Anhänger oder Wagon im Deckenbereich montierbar oder montiert ist.

15. Haltevorrichtung nach Anspruch 12 oder 13,
wobei die Haltevorrichtung als Zweiradheckträger ausgebildet ist, der auf einer Anhängerkopplung (25) befestigbar ist.

## Geänderte Patentansprüche

### Geänderte Patentansprüche gemäss Regel 137(2) EPÜ.

1. Halter (1) für Zweiräder (19), insbesondere Fahrräder und Elektrofahrräder, der in einer Kulissenbahn (5) einer Haltevorrichtung mit einem oder mehreren Haltern (1) führbar ist, umfassend
einen Kulisseneingriff (7), der in einer Längsrichtung (9) in der Kulissenbahn (5) führbar ist,
eine erste Aufhängevorrichtung (15), an der ein erstes Zweirad (19) an seinem Rad (21) aufhängbar ist, und eine erste Stützvorrichtung (35), die ausgebildet ist, das Rad (21) des ersten Zweirads (19) seitlich abzustützen, sodass das Rad (21) winklig zur Längsrichtung (9) hängt,
eine zweite Aufhängevorrichtung (17), an der ein zweites Zweirad (19) an seinem Rad (21) aufhängbar ist, und eine zweite Stützvorrichtung (37), die ausgebildet ist, das Rad (21) des zweiten Zweirads (19) seitlich abzustützen, sodass das Rad (21) winklig zur Längsrichtung (9) hängt,
wobei die erste Aufhängevorrichtung (15) und die zweite Aufhängevorrichtung (17) voneinander abgewandt angeordnet sind
und wobei die erste Stützvorrichtung (35) und die zweite Stützvorrichtung (37) voneinander abgewandt angeordnet sind.

2. Halter (1) nach Anspruch 1,
wobei der Kulisseneingriff (7) in die Kulissenbahn (5) einführbar ist und aus der Kulissenbahn (5) herausnehmbar ist.

3. Halter (1) nach Anspruch 1 oder 2,
wobei der Kulisseneingriff (7) zumindest eine Rolle (13) aufweist.

4. Halter (1) nach einem der vorangegangenen Ansprüche,
wobei die erste Aufhängevorrichtung (15) und die zweite Aufhängevorrichtung (17) in Längsrichtung (9) voneinander beabstandet sind.

5. Halter (1) nach einem der vorangegangenen Ansprüche,
wobei die erste Aufhängevorrichtung (15) und die zweite Aufhängevorrichtung (17) höhenversetzt und/oder querversetzt zueinander angeordnet sind.

6. Halter (1) nach einem der vorangegangenen Ansprüche,
wobei die erste Stützvorrichtung (35) ausgebildet ist, das Rad (21) des ersten Zweirads (19) winklig, insbesondere quer zur Längsrichtung (9), abzustützen, und die zweite Stützvorrichtung (37) ausgebildet ist, das Rad (21) des zweiten Zweirads (19) winklig, insbesondere quer zur Längsrichtung (9), abzustützen.

7. Halter (1) nach einem der vorangegangenen Ansprüche,
wobei die erste Aufhängevorrichtung (15) fest mit der ersten Stützvorrichtung (35) verbunden ist und die zweite Aufhängevorrichtung (17) fest der zweiten Stützvorrichtung (37) verbunden ist.

8. Halter (1) nach einem der vorangegangenen Ansprüche,
wobei die erste Aufhängevorrichtung (15) einen Haken aufweist und die zweite Aufhängevorrichtung (17) einen Haken aufweist.

9. Halter (1) nach einem der vorangegangenen Ansprüche,
wobei die erste und die zweite Stützvorrichtung (35, 37) als Bleche ausgebildet sind.

10. Halter (1) nach einem der vorangegangenen Ansprüche,
umfassend ein Basisteil (11), das sich zwischen der ersten und der zweiten Aufhängevorrichtung (15, 17) in Längsrichtung (9) erstreckt oder in dem die erste und die zweite Aufhängevorrichtung (15, 17) ausgebildet sind und das drehfest mit dem Kulisseneingriff (7) verbunden ist.

11. Halter (1) nach einem der vorangegangenen Ansprüche,
wobei die erste Aufhängevorrichtung (15) und/oder die zweite Aufhängevorrichtung (17) verriegelbar oder sowohl verriegelbar als auch abschließbar sind.

12. Haltevorrichtung für Zweiräder (19), insbesondere Fahrräder und Elektrofahrräder, umfassend
zumindest einen Halter (1) nach einem der vorangegangenen Ansprüche und eine Kulissenbahn (5), in der der zumindest eine Halter (1) führbar ist oder geführt ist, wobei das erste und das zweite Zweirad (19) so aufhängbar sind, dass sie von der Kulissenbahn (5) abgewandt hängen.

13. Haltevorrichtung nach Anspruch 12,
wobei die Kulissenbahn (5) so ausgebildet ist, dass der Kulisseneingriff (7) in die Kulissenbahn (5) einführbar ist und gegen Herausführen sicherbar ist und aus der Kulissenbahn (5) herausführbar ist.

14. Haltevorrichtung nach Anspruch 12 oder 13,
wobei die Kulissenbahn (5) als Profilschiene ausgebildet ist, die in einem Anhänger oder Wagon im Deckenbereich montierbar oder montiert ist.

15. Haltevorrichtung nach Anspruch 12 oder 13,
wobei die Haltevorrichtung als Zweiradheckträger ausgebildet ist, der auf einer Anhängerkopplung (25) befestigbar ist.
